# EUROPEAN PATENT SPECIFICATION

(11) **EP 2 773 553 B1**
(45) Date of publication and mention of the grant of the patent: **02.03.2022**
(21) Application number: 12794526.9
(22) Date of filing: 06.11.2012
(51) Int. Cl.: B60G 11/00

(54) **ADJUSTABLE TELESCOPIC FORK FOR A MOTORCYCLE WITH BUILT IN ELECTRIC MOTOR , EXTERNALLY ADJUSTABLE FORK TUBE ASSEMBLY, SUSPENSION SYSTEM AND MOTORCYCLE COMPRISING THE SAME**
EINSTELLBARE TELESKOPISCHE GABEL FÜR EIN MOTORRAD MIT EINGEBAUTEM ELEKTROMOTOR MIT EXTERN EINSTELLBARER GABELROHRANORDNUNG, AUFHÄNGUNGSSYSTEM UND MOTORRAD DAMIT
FOURCHE À SUSPENSION RÉGLABLE DESTINÉE À UN MOTOCYCLE DOTÉ D'UN MOTEUR ÉLECTRIQUE INTÉGRÉ, ENSEMBLE TUBE DE FOURCHE RÉGLABLE DEPUIS L'EXTÉRIEUR, SYSTÈME DE SUSPENSION ET MOTOCYCLE COMPRENANT CELUI-CI

(30) Priority: 06.11.2011 NL 2007728
(43) Date of publication of application: 10.09.2014
(73) Proprietor: Tractive Suspension B.V., 5431 ST Cuijk (NL)
(72) Inventor: LINDEMAN, Eric Alexander, NL-6642 AP Beuningen (NL)
(74) Representative: Jacobs, Bart
(86) International application number: PCT/NL2012/000069
(87) International publication number: WO 2013/066159

(56) References cited:
- EP-A1- 2 309 352
- WO-A2-98/40231
- JP-A- 6 346 941
- JP-A- 2004 197 815

## Description

The present invention is related to an adjustable telescopic fork suitable for changing the ride height of a motorcycle while riding. It is further related to an externally adjustable fork tube assembly for use in a telescopic fork and to a suspension system and motorcycle comprising the same.

Hereinafter the following definitions will be used to define some characteristics of suspension systems. Firstly, sag is defined as the difference between a fully extended length of the suspension, e.g. by lifting the wheel in the air, and the length of the suspension when it is compressed by the weight of the motorcycle and motorcyclist. Secondly, suspension travel is defined as the difference between the bottom of the suspension stroke, i.e. when the wheel hangs freely in the air, and the top of the suspension stroke when the wheel can no longer move upwards. Thirdly, ride height, also referred to as design height, is the average position of the suspension while riding over a smooth road surface.

The riding characteristics, feel, and comfort level of a motorcycle depend to a large extent on the suspension system used and the weight distribution of the motorcycle including the motorcyclist. Different motorcyclists may furthermore desire different riding characteristics mostly in connection with the type of road surface on which the motorcyclist rides. In this respect, several types of motorcycles can be identified. For instance, off-road motorcycles need to have a long suspension travel, relatively high forces at the end of the suspension stroke, and a high ground clearance in order to cope with possible obstacles. Conversely, on-road motorcycles generally have a low ground clearance and relatively short suspension travel.

All-road motorcycles are designed to handle a large variety of road surfaces. These motorcycles typically have large fuel tanks and a suspension system that allows a relatively long suspension travel.

A not yet recognized or appreciated problem of this type of motorcycle is related to the filling level of the fuel tank, which decreases during riding.

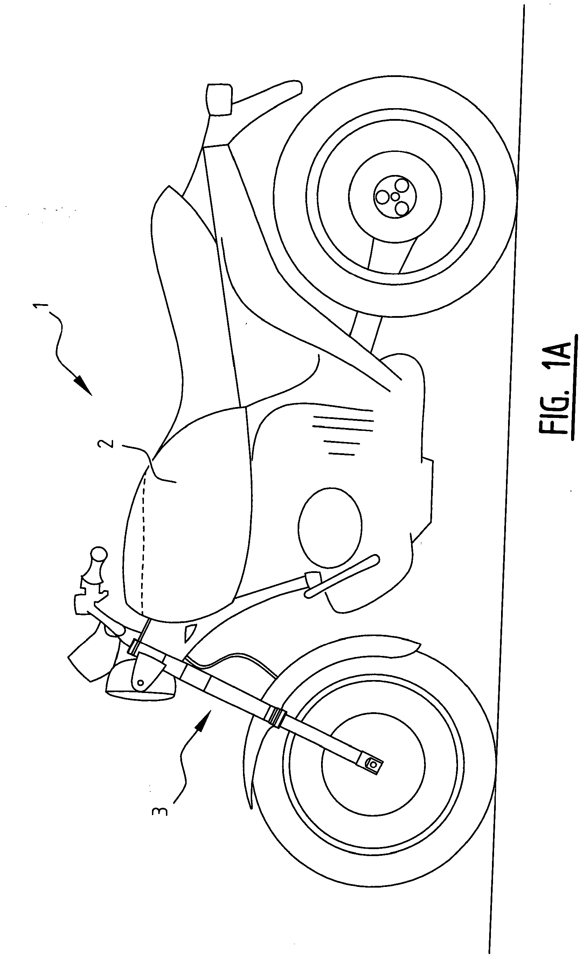

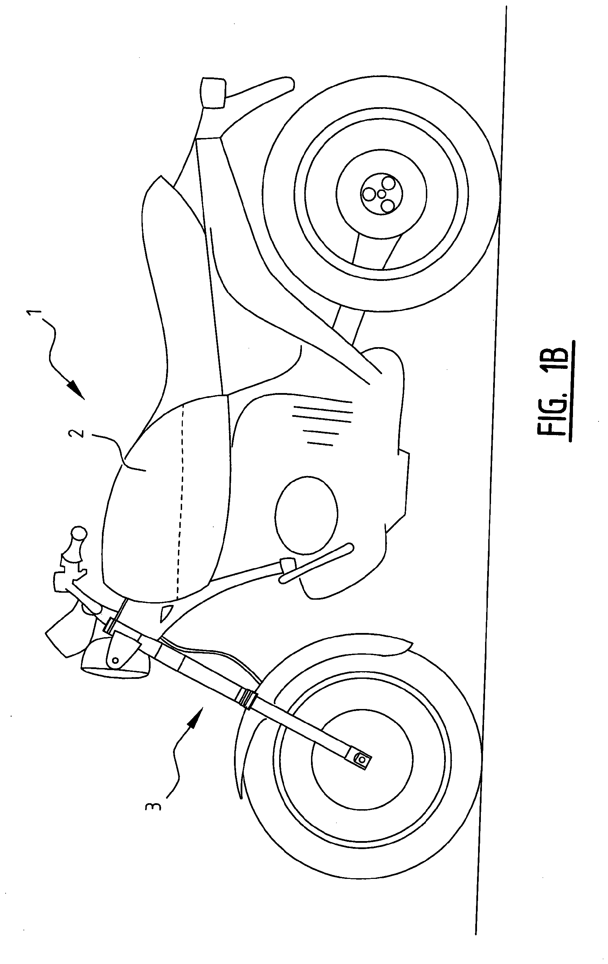

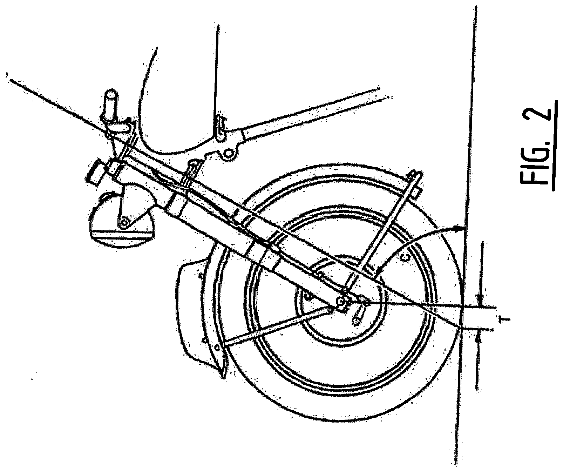

Figure 1A and 1B illustrate a motorcycle 1 with a full and empty tank 2, respectively. As can be seen from these figures, the sag of front fork 3 changes, as the fuel tank gets depleted during riding. Consequently, the caster angle (C) and the trail (T) of the motorcycle change, as illustrated in figure 2. These parameters have a strong impact on the handling and the stability of the motorcycle.

JP 2004 197815 A discloses an adjustable telescopic fork comprising a pair of parallel and spaced-apart fork tube assemblies. Each fork tube assembly comprises a coil spring mounted between a pair of support elements, wherein one of the support elements is moveably mounted.

An object of the present invention is to provide a solution to the abovementioned problem such that a motorcyclist enjoys substantially the same driving experience regardless the filling level of the fuel tank.

A further object of the present invention is to enable a motorcyclist to change the riding characteristics from typical on-road settings to off-road settings and vice versa while riding.

According to the present invention, at least one of these objects can be achieved using the adjustable telescopic fork of claim 1. This telescopic fork is suitable for changing the ride height of a motorcycle while driving. It comprises a pair of parallel and spaced-apart fork tube assemblies, wherein each fork tube assembly comprises an inner tube and an outer tube that are configured to move telescopically with respect to each other, and a coil spring arranged inside the fork tube assembly between a support element of the inner tube and a support element of the outer tube. At least one of the fork tube assemblies has one of the support elements moveably mounted in the inner or outer tube for forming an adjustable fork tube assembly. In addition, it comprises an externally operable electric motor having a drive shaft, and a transmission unit for converting a rotational motion of the drive shaft into a translational movement of the moveably mounted support element. According to the invention, the electric motor and transmission unit are both arranged in the inner tube or outer tube.

An example of a suspension system that can be adjusted while riding is known from JP 2004224091. This document describes the use of compressed air to change the ride height of the motorcycle.

A further example of a suspension system that can be adjusted while riding is known from EP 0544649. This document also describes changing the ride height, albeit using hydraulics.

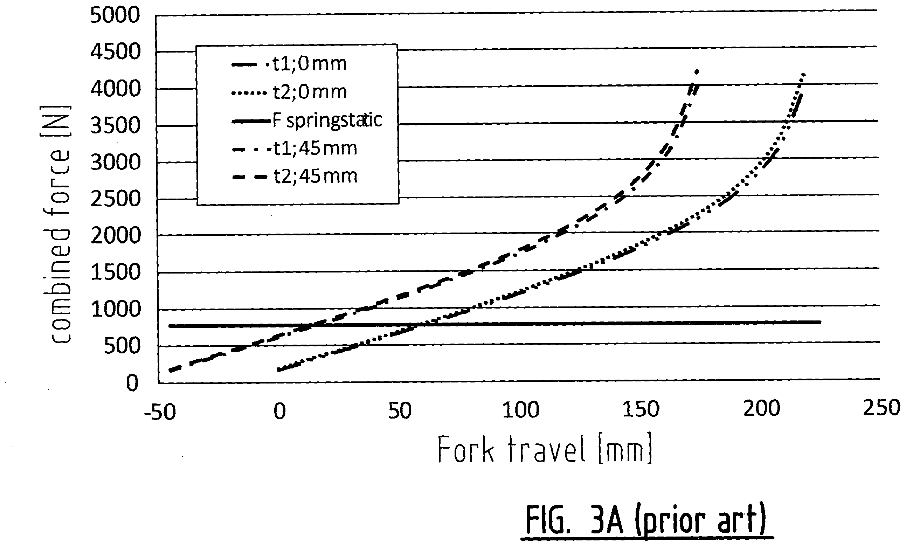

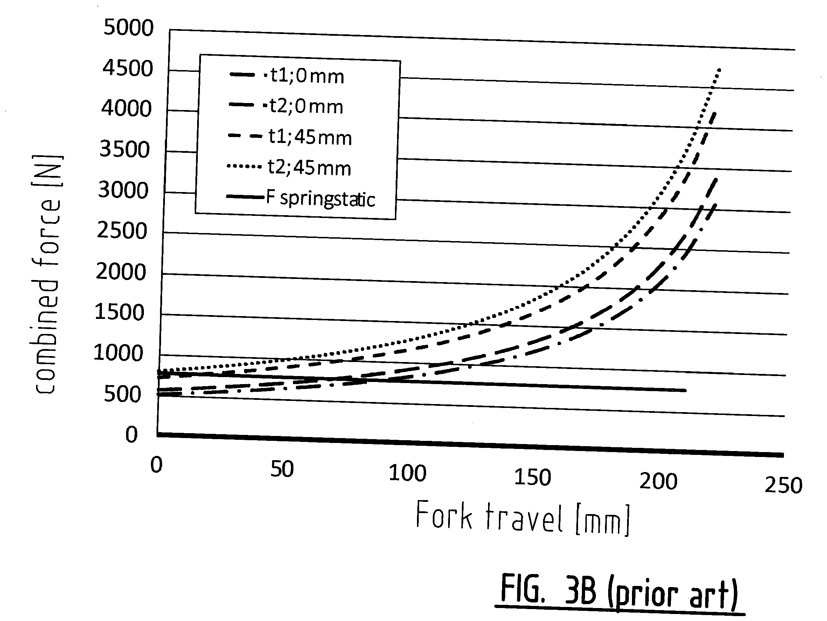

Figures 3A and 3B illustrate typical characteristics for hydraulically and pneumatically adjustable suspension systems, respectively. Figure 3A depicts the behavior of the system of EP 0544649 using four situations: 1) no adjustment, with a damper temperature of t1=20°C, 2) no adjustment with a damper temperature of t2=50°C, 3) adjustment of 45mm with a damper temperature of t1=20°C, and 4) adjustment of 45mm with a damper temperature of t2=50°C.

It is assumed that the suspension system in figures 3A and 3B comprise a rebound spring with an infinitely high spring rate. Such a rebound spring is normally arranged in between the piston and an end of the cylinder in which the piston moves to prevent hard contact between them when the suspension becomes fully extended as a result of the unsprung weight of the motorcycle. If the piston moves away from the end of the cylinder, e.g. during compression of the front fork, the rebound spring becomes detached from the piston and it no longer has an influence on the suspension characteristics.

In figures 3A and 3B, the front fork travel of the suspension system on the x-axis is given in millimeters, on the y-axis the combined force of the coil spring and the air spring is given in Newton. Here, any characteristics of a rebound spring are not included. The air spring is formed due to the fact that the front fork is a closed space that is partially filled with hydraulic fluid. When the available space for the hydraulic fluid decreases during compression of the front fork, the available space for the air in the system will decrease accordingly. At small volumes, the air contained therein will act as an air spring.

For intermediate values of the front fork travel, the characteristics are substantially linear, corresponding to Hooke's law for spring compression. At higher values, the air spring becomes dominant, resulting in a sharp increase in combined force with increasing front fork travel.

The combined force at no front fork travel (x=0) corresponds to the force that exists when the front fork is not loaded by the weight of the motorcycle. Any force in that situation is caused by pre-loading of the coil spring. Because the rebound spring is assumed to have an infinitely high spring rate, negative front fork travel, e.g. achieved by pulling, is not possible. As such, the curves show a vertical portion at x=0. Loading the front fork with the unsuspended weight of the motorcycle, e.g. achievable by lifting the motorcycle such that the front wheel hangs freely in the air, does not change the length of the front fork.

When the motorcycle is put on the ground, it will display sag due to the sprung mass of the motorcycle including the rider and any luggage. The suspension system will compress until the situation is reached wherein the combined spring force equals the fraction of the force due to the total sprung mass that can be attributed to the front wheel. In figure 3A, this point can be identified as the crossing point between the horizontal line, which represents the fraction of the force due to the total amount sprung mass, and the force versus travel curve. The fraction is assumed to correspond to a mass of 75 kg per fork tube assembly. Typically, a telescopic front fork comprises two fork tube assemblies.

According to EP 0544649, the actual length of the front fork changes when going from situations 1 and 2 to situations 3 and 4, while the suspension travel remains unchanged. In this way, the ride height can be increased. In figure 3A, this is indicated by a horizontal shift for situations 3 and 4. These curves do therefore not correspond to negative front fork travel, but indicate that equilibrium is achieved with a front fork length that is approximately 45 mm higher than for situations 1 and 2.

As can be derived from figure 3A, with the system of EP 0544649 the travel versus force characteristics remain unchanged after changing the ride height. The maximum forces at the end of the suspension stroke are substantially the same. Furthermore, with this system the suspension sag remains unchanged. This system does therefore not offer the possibility to change between off-road and on-road driving characteristics. For the suspension system to cope with higher obstacles, a raise of ground clearance only will not be enough to offer sufficient comfort and traction when the motorcycle is used off road. Higher obstacles require higher maximum forces and longer positive travel to dampen out higher acceleration levels of the unsprung mass.

The system of figure 3B corresponds to the system of JP 2004224091. Figure 3B also depicts four situations: 1) no adjustment, with a damper temperature of t1=20°C, 2) no adjustment with a damper temperature of t2=50°C, 3) adjustment of 45mm with a damper temperature of t1=20°C, and 4) adjustment of 45mm with a damper temperature of t2=50°C.

With the system of figure 3B, the maximum forces at the end of the suspension stroke increase when the ride height is increased. Moreover, the travel versus force characteristics have an exponential character which means that during average riding the suspension system will be subjected to more travel than the system of figure 3A. When a motorcycle is tuned for off road use, ground clearance will be increased, maximum forces of the suspension system will be increased and positive suspension travel will be increased to offer more efficient damping. Increasing ground clearance will raise the center of gravity of the vehicle causing more squat under acceleration and more drive under braking. The typical exponential force characteristics of the system of JP 200422091 are not suitable to offer stability under these acceleration and braking conditions.

The system also shows a strong dependency on the ambient and damper temperature resulting in different riding experiences, such as sag, at different temperatures. Finally, as relatively high air pressures are used, which are also varying, the sealing components of a pneumatic system are subjected to high friction and wear. Hence, also this system does not provide a suitable solution to achieve the above identified objects.

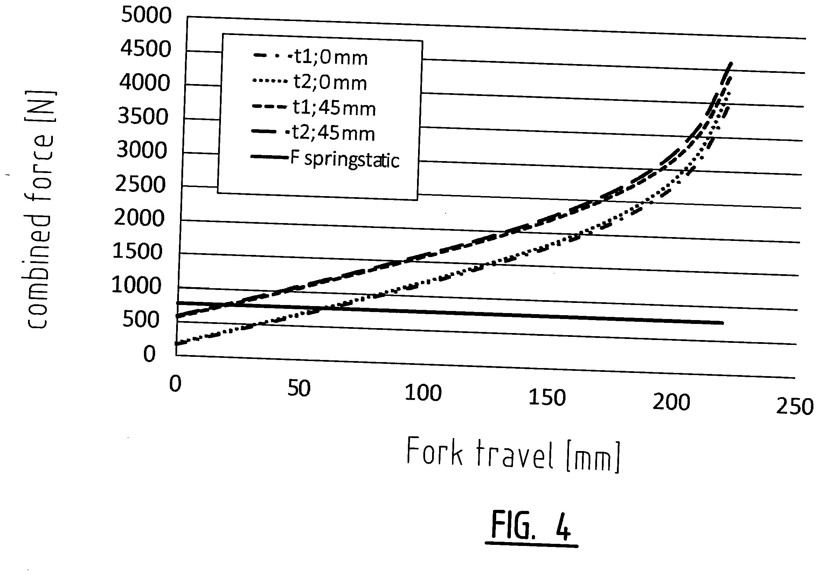

Figure 4 illustrates the characteristics of an adjustable suspension system in accordance with the present invention. Figure 4 depicts four situations: 1) no adjustment, with a damper temperature of t1=20°C, 2) no adjustment with a damper temperature of t2=50°C, 3) adjustment of 45mm with a damper temperature of t1=20°C, and 4) adjustment of 45mm with a damper temperature of t2=50°C.

In figure 4, sag is changed by altering the pre-loading of the coil spring. This allows the fuel tank dependency to be accounted for. At the same time, the travel versus force characteristics differ between the high and low ride height position. In the former position, corresponding to off-road settings, positive suspension travel is increased and the end forces for maximum travel are also increased. All these advantages are achieved without additional friction, wear, and with minimal thermal effects.

Assuming a rebound spring with an infinitively high spring rate, pre-loading the coil spring will not alter the length of the front fork under unloaded conditions. When the front fork is loaded by the total sprung mass of the motorcycle, a force will be exerted on the suspension system as a result of which the fork length will decrease. Under these conditions, the rebound coil will get detached from the piston and will therefore no longer influence the suspension characteristics. Equilibrium will be established at lower sag due to the pre-loading of the coil spring. Consequently, the amount of available positive travel starting from the ride height becomes higher after pre-loading the coil spring.

In an embodiment, at least one of the fork tube assemblies comprises a cylinder in which a piston with piston rod is moveably mounted, wherein the cylinder is fixedly connected to one of the inner and outer tube, and wherein the piston rod is fixedly connected to the other of the inner and outer tube. The piston can move within the cylinder. However, it cannot exit the cylinder as it will be stopped by a cap that closes the cylinder. This cap has a hole to allow the piston rod to pass there through. As one of the inner and outer tubes is fixedly connected to the piston rod while the other tube is fixedly connected to the cylinder, the inner and outer tube cannot be separated.

In a further embodiment, the cylinder is filled with hydraulic fluid, such as oil, and the piston comprises a valve for allowing fluid to move through the piston. As such, the cylinder, piston, and piston rod form a damper. This allows shocks to be absorbed. Furthermore, it prevents unwanted mechanical oscillations of the motorcycle under the influence of the coil spring.

In a further embodiment, the telescopic fork comprises a resilient element, such as a spring, arranged between the piston and an end of the cylinder that accommodates the piston rod to pass there through. The resilient element, preferably in the form of a rebound spring, urges the piston to move away from the end of the cylinder that is facing the electric motor. It therefore urges the inner tube and the outer tube to move towards each other, contrary to the action of the coil spring. The advantage of using a resilient element arranged in this manner is that it prevents a hard contact between the piston and the end of the cylinder, for instance when a pulling force is exerted on the front wheel or due to severe oscillatory behavior of the front wheel suspension. It should be noted that the resilient member is normally fixedly connected at only one side to either the piston or the end cap of the cylinder.

In an even further embodiment, the resilient element has a spring rate that is substantially equal to a spring rate of the coil spring and/or wherein the spring rates of the coil spring and the resilient element are of the same order of magnitude.

Compared to an infinitely high spring rate, a telescopic fork with a rebound spring with a moderate spring rate, will display that the fork length increases upon pre-loading the coil spring under unloaded conditions. During pre-loading the rebound spring will compress to absorb part of the pre-loading force. When the front wheel of a motorcycle with such a fork hangs freely in air, the unsprung mass of the motorcycle, e.g. including the weight of the wheel itself, will cause the fork to extend. However, when the motorcycle is on the ground, the coil spring will compress due to the sprung mass and the rebound coil will become detached from the piston, thereby no longer influencing the suspension characteristics. However, because the coil spring is pre-loaded, the sag will be lower resulting in a higher ride height, as is the case for infinitely high spring rates.

During periods of high acceleration, downward force on the front wheel is reduced sometimes up to the point where the front wheel comes loose from the road surface. Using moderate spring rates for the rebound spring allows the front fork to extend compared to the ride height position of the front fork. Consequently, contact between road surface and front wheel can be prolonged thereby improving stability and controllability of the motorcycle.

The adjustable fork tube assembly may comprise a moveably mounted spacer tube engaged on one end by the transmission unit and on another end connected to the coil spring, wherein an edge of the spacer tube facing the coil spring forms the moveably mounted support element of the inner tube or the outer tube, and wherein the spacer tube encloses the piston rod. By having the spacer tube, the use of very long coil springs can be avoided. It should be noted that the spacer tube may not be fixedly connected to the coil spring. The coil spring itself may also not be fixedly connected to the inner or outer tube.

In a further embodiment, the electric motor and transmission unit are arranged in a housing that is fixedly connected to the inner tube or the outer tube, and the piston rod is fixedly connected to the housing. The latter connection can be via direct contact between the housing and the piston rod, or via an intermediate component that is also fixedly connected to the housing.

In a still further embodiment, the transmission unit comprises a gear box connected to a drive shaft of the electric motor, wherein the gear box drives shaft. The adjustable fork tube assembly further comprises an adjustment tube that encloses the shaft and which is fixedly arranged in between the gear box and the spacer tube, and which is preferably fixedly connected to the housing. The spacer tube and adjustment tube are configured to move telescopically with respect to each other. A conversion between a rotational motion of the shaft and a telescopic motion between the spacer tube and the adjustment tube is provided by the transmission unit.

In a further embodiment, the shaft of the gear box is a threaded shaft, and the adjustment tube comprises a groove that extends towards the spacer tube. The transmission unit further comprises an engaging element that extends from the shaft through the groove of the adjustment tube and which is configured to engage an edge of said spacer tube. A threaded hole is provided in the engaging element that is used for mounting the engaging element on the threaded shaft in such a manner that rotation of the shaft causes the engaging element to move along the groove to thereby displace the spacer tube.

In a further embodiment, the drive shaft of the electric motor and the threaded shaft of the gear box extend parallel to an axis of the inner tube or the outer tube.

The fixed connection between the piston rod and one of the inner and outer tubes can be realized by having the adjustment tube closed at an end away from the electric motor by a cap, wherein the cap is fixedly connected to the piston rod.

In a preferred embodiment, the cylinder is fixedly mounted to the inner tube, and the housing is fixedly connected to the outer tube.

The applicant has realized that the abovementioned functionality need not be incorporated in each of the fork tube assemblies. Any imbalance that may result from changing the pre-loading of the coil spring on one side of the telescopic fork only can easily be accommodated by contemporary front wheel axle constructions. Consequently, in an embodiment, the pair of fork tube assemblies consists of one adjustable fork tube assembly as defined above and one dampened fork tube assembly. The dampened fork tube assembly comprises an inner tube and an outer tube that are configured to move telescopically with respect to each other, and a coil spring arranged inside the fork assembly between a support element of the inner tube and a support element of the outer tube. It also comprises a cylinder in which a piston with piston rod is moveably mounted, wherein the cylinder is fixedly connected to one of the inner and outer tube, and wherein the piston rod is fixedly connected to the other of the inner and outer tube. The cylinder is filled with hydraulic fluid, and the piston comprises a valve for allowing fluid to move through the piston.

According to a second aspect, the present invention also provides an externally adjustable fork tube assembly as defined above.

According to a third aspect, the present invention also provides a suspension system comprising the adjustable telescopic fork and/or the externally adjustable fork tube assembly as defined above.

In an embodiment, the suspension system further comprises a sensing unit for sensing at least one of a filling level of a fuel tank of the motorcycle and a travel of a suspension of the motorcycle, and a control unit for controlling the electric motor to automatically adjust the length of the adjustable fork tube assembly to compensate for a reduction in the filling level of the tank during driving.

In another or further embodiment, the suspension system may further comprise an externally operable switch for switching between at least two states of the switch, such as an off-road and on-road state, a memory for holding control signals for the electric motor corresponding to each of the at least two states of the switch, and a control unit configured for acquiring the control signals pertaining to a new state of the switch after the switch has been switched, and to control the electric motor using the acquired control signals.

It should be noted that the control unit for compensating fuel tank depletion and the control unit for setting the suspension system in different states may in fact be the same control unit.

According to a fourth aspect, the present invention also provides a motorcycle comprising the adjustable telescopic fork and/or the externally adjustable fork tube assembly and/or the suspension system as defined above.

Next, the invention will be described in more detail under reference to the accompanying drawing, wherein:
Figures 1A-1B illustrate a known all-road motorcycle with a substantially full and empty fuel tank, respectively;
Figure 2 schematically depicts the front wheel of the motorcycle of figure 1A in more detail;
Figures 3A and 3B depict the suspension system characteristics of known adjustable fork tube assemblies;
Figure 4 shows the suspension system characteristics for an embodiment of an adjustable fork tube assembly in accordance with the present invention;
Figure 5 presents a cross-section corresponding to the adjustable fork tube assembly of figure 4;
Figure 6 shows a detailed view of the adjustable telescopic fork of figure 5 at the position of the outer tube;
Figure 7 shows a detailed view of the adjustable telescopic fork of figure 5 at the position of the inner tube; and
Figure 8 illustrates a schematic diagram of an embodiment of a suspension system in accordance with the present invention.

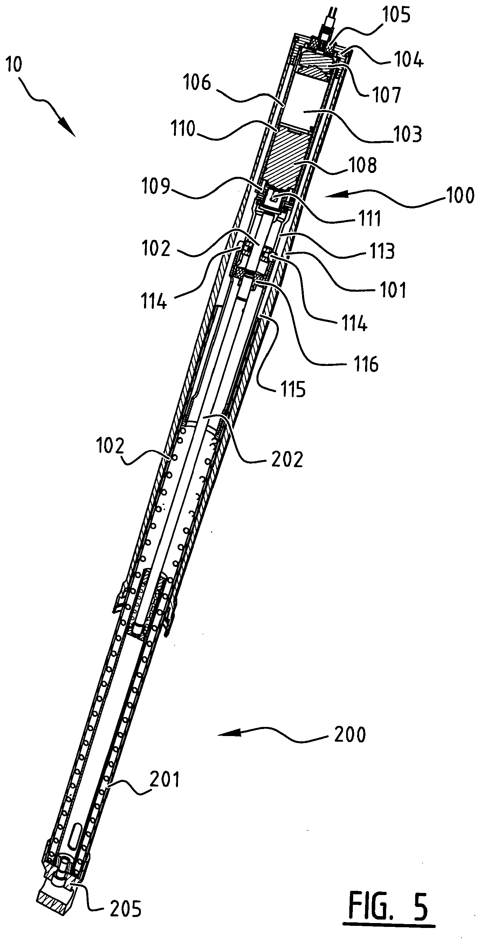

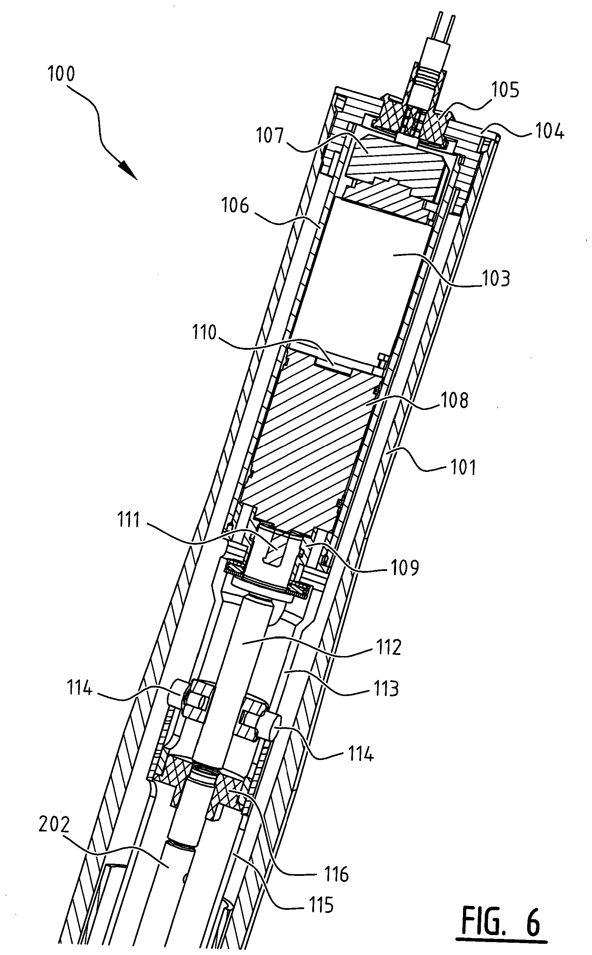

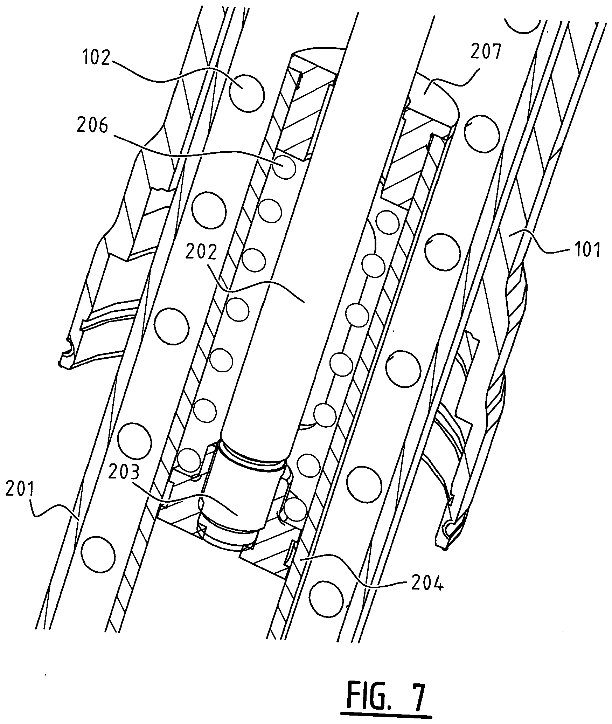

Figure 5 illustrates a cross-section of an embodiment of an externally adjustable fork tube assembly 10 according to the present invention. Fork tube assembly 10 comprises an upper part 100, depicted in more detail in figure 6, and a lower part 200, illustrated in more detail in figure 7. It comprises an inner tube 201 and an outer tube 101 that can slide telescopically in and out of each other. Again, it is noted that a telescopic front fork normally comprises a pair of fork tube assemblies.

The sliding motion of outer tube 101 and inner tube 201 is spring biased by a coil spring 102. When sliding inwards, coil spring 102 is being compressed. This situation corresponds to positive travel.

The load on coil spring 102 is determined by that part of the weight of the vehicle including motorcyclist, luggage and fuel that can be attributed to the front wheel. The sag is determined by the spring rate of coil spring 102, the load on coil spring 102 and its pre-loading. The sag of the front suspension has great influence on handling, comfort, stability and off road capabilities of the vehicle.

According to the present invention, the sag of the vehicle is made adjustable while riding by means of a Direct Current (DC) motor 103 directly changing the pre-loading of coil spring 102 inside the fork tube assembly 10.

On the upper side of upper part 100 a screw cap 104 is used to close upper part 100. Inside screw cap 104 a rubber seal 105 is fitted to allow an air tight seal between an outlet passage for electrical wiring and the pressure inside upper part 100. Inside screw cap 104, a housing 106 is mounted by means of a threaded connection and sealed by an O-ring.

Housing 106 accommodates DC motor 103, a Hall sensor 107, and a planetary gear box 108. These components are enclosed in housing 106 by means of a cap 109. This cap 109 seals DC motor 103 from direct contact with oil and pressure inside upper part 100. Planetary gear box 108 is connected to a drive shaft 110 of DC motor 103. Gear box 108 has an output shaft 111 that is connected to a threaded shaft 112. As both output shaft 111 and threaded shaft 112 may protrude through cap 109, sealing is applied to protect the electronics in housing 106 against pressure and oil inside upper part 100.

Cap 109 is connected to or integrated with an adjustment tube 113. This tube 113 is equipped with two slits in which engaging elements 114 are guided. These elements 114 are provided with a threaded hole allowing them to be rotationally mounted on threaded shaft 112.

When threaded shaft 112 rotates, engaging elements 114 tend to rotate along with shaft 112. However, because engaging elements 114 protrude through the slits in adjustment tube 113, they cannot rotate along with shaft 112. Instead, they will slide along the slits while simultaneously rotating with respect to threaded shaft 112.

Engaging elements 114 engage a spacer tube 115 which at an opposing end is provided with an edge that connects to coil spring 102. This connection is generally not a fixed connection. Usually, spacer tube 115 pushes or rests against coil spring 102, see figure 5.

At a lower end of adjustment tube 113, a cap 116 is provided that is connected to adjustment tube 113 by means of a threaded connection. Cap 116 is connected to a piston rod 202 that is connected to a piston 203 which resides in a cylinder 204 in bottom part 200.

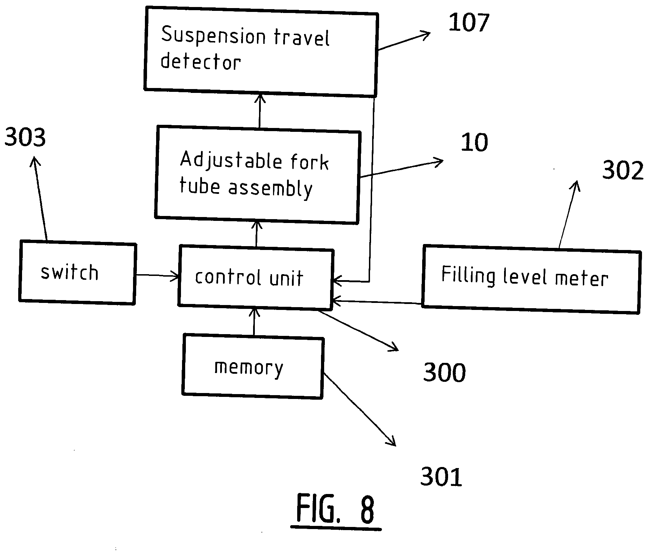

The rotation of DC motor 103 is reduced in planetary gear box 108 causing an increase of torque at the planetary gear box output shaft 111. Hall sensor 107 is registering the revolutions of DC motor 103. This signal is transferred through the outlet passage on top of upper part 100 to an electronic control unit 300, see figure 8. This unit 300 is programmed to count hall pulses and register the direction of electrical current through the DC motor 103, thereby always knowing the exact position and direction of engaging element 114. The pre-loading of coil spring 102 can be changed by moving engaging element 114 against the spring force of coil spring 102, thereby causing an increase of ride height of the vehicle.

Bottom part 200 comprises an inner tube 201 to which cylinder 204 is fixedly connected by means of a cap 205 that closes inner tube 201, see figure 5. Inside cylinder 204, a piston 203 is allowed to translate. It is connected to piston rod 202 which extends outside of cylinder 204 towards upper part 100.

Piston 203 cannot leave cylinder 204, which is fixedly connected to inner tube 201. Furthermore, piston rod 202 is fixedly connected to outer tube 101, via cap 116, adjustment tube 113, cap 109, and housing 106. Consequently, inner tube 201 and outer tube 101 cannot separate from each other.

Cylinder 204 can be filled with hydraulic fluid. Furthermore, piston 203 may be provided with a valve to restrict the flow of hydraulic fluid there through. In this way, a conventional damper is formed to dampen the movements of inner tube 201 and outer tube 101 with respect to each other.

Now referring to figure 7, a rebound spring 206 may be included in cylinder 204 near a cap 207 on a side opposing cap 205. Rebound spring 206 can exert a force on piston 203 to move towards cap 205, i.e. it urges towards negative travel to help during the outward stroke of the suspension system.

Figure 8 illustrates a schematic diagram of an embodiment of a suspension system in accordance with the present invention. It comprises a control unit 300 that is connected to an adjustable fork tube assembly 10. It is also connected to a meter 302 for sensing a filling level of a fuel tank of the motorcycle, a switch 303 for switching between different states, and a suspension travel detector, which can be embodied as Hall detector 107.

Depending on the input signal, control unit 300 controls DC motor 103.

When the filling level of the fuel tank is fed to control unit 300, the unit may calculate the necessary control signals, e.g. duration of an on-signal, with which to control DC motor 103 such that a decrease in weight, caused by the depletion of the fuel tank, is compensated for.

When switch 303 is switched between at least two states, for instance from an off-road to an on-road setting, control unit 300 may consult a memory 301 to fetch appropriate control signals. To that end, memory 301 may comprise control signals for the electric motor corresponding to each of the at least two states of the switch.

When the travel of the suspension is measured using Hall detector 107 or other measuring means, control unit 300 may intervene to adjust the pre-loading of coil spring 102. This could for instance be performed on the basis that the time average of travel has increased due to an additional passenger. However, the signal from Hall detector 107 may also be used as a feedback signal to ensure that adjustment tube 113 has reached the appropriate position, for instance when a control loop is established to correct for depletion of the fuel tank.

The invention has been described using embodiments thereof. It should be apparent to the skilled person in the art that the present invention is not limited to those embodiments and that various modifications may be implemented without departing from the scope of invention which is described in the appending claims.

## Claims

1. An adjustable telescopic fork suitable for changing the ride height of a motorcycle while driving, said adjustable telescopic fork comprising a pair of parallel and spaced-apart fork tube assemblies (10), wherein each fork tube assembly comprises:
an inner tube (201) and an outer tube (101) that are configured to move telescopically with respect to each other;
a coil spring (102) arranged inside the fork tube assembly between a support element of the inner tube and a support element of the outer tube;
wherein at least one of the fork tube assemblies:
has one of the support elements (115) moveably mounted in one of the inner and outer tube such that it is able to move relative to said inner or outer tube, respectively, said moveably mounted support element being configured for forming an adjustable fork tube assembly;
comprises an externally operable electric motor (103) having a drive shaft (110); and
comprises a transmission unit (112, 114) for converting a rotational motion of the drive shaft into a translational movement of the moveably mounted support element thereby changing a pre-loading of the coil spring, wherein the electric motor and transmission unit are both arranged in said one of the inner tube or outer tube,
**characterized in that** the moveably mounted support element (115) is mounted between the electric motor (103) and transmission unit (112, 114) on one side of the moveably mounted support element (115) and the coil spring (102) on the other
side of the moveably mounted support element (115).

2. The telescopic fork of claim 1, wherein at least one of the fork tube assemblies comprises a cylinder (204) in which a piston (203) with piston rod (202) is moveably mounted, said cylinder being fixedly connected to one of the inner and outer tube, and wherein said piston rod is fixedly connected to the other of the inner and outer tube;
wherein the cylinder is filled with hydraulic fluid and the piston comprises a valve for allowing fluid to move through the piston; and/or
wherein the telescopic fork further comprises a resilient element, such as a spring, arranged between the piston and an end of the cylinder that accommodates the piston rod to pass there through, wherein the resilient element has a spring rate that is substantially equal to a spring rate of the coil spring and/or wherein the spring rates of the coil spring and the resilient element are of the same order of magnitude.

3. The telescopic fork of claim 2, wherein the moveably mounted support element (115) of the adjustable fork tube assembly comprises a moveably mounted spacer tube (115) engaged on one end by said transmission unit and on another end connected to the coil spring, wherein an edge of the spacer tube facing the coil spring forms the moveably mounted support element of the inner tube or the outer tube, and wherein the spacer tube encloses the piston rod.

4. The telescopic fork of claim 3, wherein the electric motor and transmission unit are arranged in a housing (106) that is fixedly connected to the inner tube or the outer tube, and wherein the piston rod is fixedly connected to the housing.

5. The telescopic fork of claim 4, wherein the transmission unit comprises a gear box (108) connected to a drive shaft of the electric motor, said gear box driving a shaft (111, 112), said adjustable fork tube assembly further comprising an adjustment tube (113) that encloses the shaft and which is fixedly arranged in between said gear box and said spacer tube, wherein said spacer tube and adjustment tube are configured to move telescopically with respect to each other, said transmission unit providing a conversion between a rotational motion of the shaft and a telescopic motion between said spacer tube and said adjustment tube.

6. The telescopic fork of claim 5, wherein the shaft of the gear box is a threaded shaft (112), and wherein the adjustment tube comprises a groove that extends towards the spacer tube, the transmission unit further comprising an engaging element that extends from the shaft through the groove of the adjustment tube and which is configured to engage an edge of said spacer tube, said engaging element having a threaded hole used for mounting the engaging element on the threaded shaft in such a manner that rotation of the shaft causes the engaging element to move along the groove to thereby displace the spacer tube;
wherein the drive shaft of the electric motor and the threaded shaft of the gear box extend parallel to an axis of the inner tube or the outer tube.

7. The telescopic fork of any of the claims 5-6, wherein the adjustment tube is fixedly connected to the housing.

8. The telescopic fork of any of the claims 5-7, wherein the adjustment tube is closed at an end away from the electric motor by a cap (109), said cap being fixedly connected to the piston rod.

9. The telescopic fork of any of the claims 4-8, wherein the cylinder is fixedly mounted to the inner tube, and wherein the housing is fixedly connected to the outer tube.

10. The telescopic fork of any of the previous claims, wherein the pair of fork tube assemblies consists of one adjustable fork tube assembly in accordance with any of the previous claims and one dampened fork tube assembly, said dampened fork tube assembly comprising:
an inner tube and an outer tube that are configured to move telescopically with respect to each other;
a coil spring arranged inside the fork assembly between a support element of the inner tube and a support element of the outer tube; and
a cylinder in which a piston with piston rod is moveably mounted, said cylinder being fixedly connected to one of the inner and outer tube, and wherein said piston rod is fixedly connected to the other of the inner and outer tube, wherein the cylinder is filled with hydraulic fluid, and wherein the piston comprises a valve for allowing fluid to move through the piston.

11. An externally adjustable fork tube assembly in accordance with the adjustable fork tube assembly as defined in any of the previous claims.

12. A suspension system comprising the adjustable telescopic fork of any of the previous claims or the externally adjustable fork tube assembly of claim 11.

13. The suspension system according to claim 12, said suspension system further comprising:
a sensing unit (302) for sensing at least one of a filling level of a fuel tank of said motorcycle and a travel of a suspension of said motorcycle;
a control unit (300) for controlling the electric motor to automatically adjust the length of the adjustable fork tube assembly to compensate for a reduction in the filling level of the tank during driving.

14. The suspension system according to claim 12 or 13, said suspension system further comprising:
an externally operable switch (303) for switching between at least two states of the switch, such as an off-road and on-road state; and
a memory (301) for holding control signals for the electric motor corresponding to each of the at least two states of the switch;
wherein the control unit is further configured for acquiring the control signals pertaining to a new state of the switch after the switch has been switched, and to control the electric motor using the acquired control signals.

15. A motorcycle comprising the suspension system of any of claims 12-14 and/or the externally adjustable fork tube assembly of claim 11 and/or the telescopic fork of any of the claims 1-10.

## Patentansprüche

1. Eine verstellbare Teleskopgabel, die zur Änderung der Fahrhöhe eines Motorrads während der Fahrt geeignet ist, wobei die verstellbare Teleskopgabel ein Paar parallele und voneinander beabstandete Gabelrohreinheiten (10) aufweist, wobei jede Gabelrohreinheit Folgendes aufweist:
ein inneres Rohr (201) und ein äußeres Rohr (101) die so ausgebildet sind, dass sie sich teleskopartig im Verhältnis zueinander bewegen;
eine Schraubenfeder (102), die innerhalb der Gabelrohreinheit zwischen einem Stützelement des inneren Rohrs und einem Stützelement des äußeren Rohrs angeordnet ist;
wobei mindestens eine der Gabelrohreinheiten:
eines der Stützelemente (115) hat, das beweglich in einem des inneren und äußeren Rohrs angebracht ist, so dass es in der Lage ist, sich jeweils relativ zu dem inneren oder äußeren Rohr zu bewegen, wobei das beweglich angebrachte Stützelement so ausgelegt ist, dass es eine einstellbare Gabelrohreinheit bildet;
einen von außen bedienbaren Elektromotor (103) mit einer Antriebswelle (110) aufweist;
eine Übertragungseinheit (112, 114) zum Umwandeln einer Rotationsbewegung der Antriebswelle in eine Translationsbewegung des beweglich angebrachten Stützelements umfasst, wodurch eine Vorspannung der Schraubenfeder verändert wird, wobei der Elektromotor und die Übertragungseinheit beide in einem des inneren Rohrs oder des äußeren Rohrs angeordnet sind,
**dadurch gekennzeichnet,**
**dass** das beweglich angebrachte Stützelement (115) zwischen dem Elektromotor (103) und der Übertragungseinheit (112, 114) auf einer Seite des beweglich angebrachten Stützelements (115) und der Schraubenfeder (102) auf der anderen Seite des beweglich angebrachten Stützelements (115) angebracht ist.

2. Die Teleskopgabel nach Anspruch 1, wobei mindestens eine der Gabelrohreinheiten einen Zylinder (204) umfasst, in dem ein Kolben (203) mit einer Kolbenstange (202) beweglich angebracht ist, wobei der Zylinder fest mit einem des inneren und äußeren Rohrs verbunden ist, und wobei die Kolbenstange fest mit dem anderen des inneren und äußeren Rohrs verbunden ist;
wobei der Zylinder mit Hydraulikflüssigkeit gefüllt ist und der Kolben ein Ventil aufweist, das eine Bewegung der Flüssigkeit durch den Kolben ermöglicht; und/oder
wobei die Teleskopgabel weiter ein elastisches Element, wie eine Feder, aufweist, das zwischen dem Kolben und einem Ende des Zylinders angeordnet ist, das die Kolbenstange aufnimmt, um durch dieses hindurchgeführt zu werden, wobei das elastische Element eine Federkonstante aufweist, die im Wesentlichen gleich einer Federkonstante der Schraubenfeder ist, und/oder wobei die Federkonstanten der Schraubenfeder und des elastischen Elements in der gleichen Größenordnung liegen.

3. Die Teleskopgabel nach Anspruch 2, wobei das beweglich angebrachte Stützelement (115) der verstellbaren Gabelrohreinheit ein beweglich angebrachtes Abstandsrohr (115) aufweist, das an einem Ende mit der Übertragungseinheit in Eingriff steht und an einem anderen Ende mit der Schraubenfeder verbunden ist, wobei ein der Schraubenfeder zugewandter Rand des Abstandsrohrs das beweglich angebrachte Stützelement des inneren Rohrs oder des äußeren Rohrs bildet, und wobei das Abstandsrohr die Kolbenstange umschließt.

4. Die Teleskopgabel nach Anspruch 3, wobei der Elektromotor und die Übertragungseinheit in einem Gehäuse (106) angebracht sind, das fest mit dem inneren Rohr oder dem äußeren Rohr verbunden ist, und wobei die Kolbenstange fest mit dem Gehäuse verbunden ist.

5. Die Teleskopgabel nach Anspruch 4, wobei die Übertragungseinheit ein Getriebe (108) aufweist, das mit einer Antriebswelle des Elektromotors verbunden ist, wobei das Getriebe eine Welle (111, 112) antreibt, wobei die verstellbare Gabelrohreinheit weiter ein Einstellrohr (113) aufweist, das die Welle umschließt und das fest zwischen dem Getriebegehäuse und dem Abstandsrohr angeordnet ist, wobei das Abstandsrohr und das Einstellrohr so ausgebildet sind, dass sie sich teleskopartig im Verhältnis zueinander bewegen, wobei die Übertragungseinheit eine Umwandlung zwischen einer Drehbewegung der Welle und einer Teleskopbewegung zwischen dem Abstandsrohr und dem Einstellrohr bereitstellt.

6. Die Teleskopgabel nach Anspruch 5, wobei die Welle des Getriebegehäuses eine Gewindewelle (112) ist, und wobei das Einstellrohr eine Nut aufweist, die sich in Richtung des Abstandsrohrs erstreckt, wobei die Übertragungseinheit ferner ein Eingriffselement aufweist, das sich von der Welle durch die Nut des Einstellrohrs erstreckt und das so eingerichtet ist, dass es in eine Kante des Abstandsrohrs eingreift, wobei das Eingriffselement ein Gewindeloch aufweist, das zur Befestigung des Eingriffselements auf der Gewindewelle in einer solchen Weise verwendet wird, dass eine Drehung der Welle eine Bewegung des Eingriffselements entlang der Nut bewirkt, um dadurch das Abstandsrohr zu verschieben;
wobei die Antriebswelle des Elektromotors und die Gewindewelle des Getriebes parallel zu einer Achse des inneren Rohrs oder des äußeren Rohrs verlaufen.

7. Die Teleskopgabel nach einem der Ansprüche 5 bis 6, wobei das Einstellrohr fest mit dem Gehäuse verbunden ist.

8. Die Teleskopgabel nach einem der Ansprüche 5 bis 7, wobei das Einstellrohr an einem vom Elektromotor abgewandten Ende durch eine Kappe (109) verschlossen ist, wobei die Kappe fest mit der Kolbenstange verbunden ist.

9. Die Teleskopgabel nach einem der Ansprüche 4 bis 8, wobei der Zylinder fest an dem Innenrohr angebracht ist, und wobei das Gehäuse fest mit dem äußeren Rohr verbunden ist.

10. Die Teleskopgabel nach einem der vorhergehenden Ansprüche, wobei das Paar von Gabelrohreinheiten aus einer einstellbaren Gabelrohreinheit nach einem der vorhergehenden Ansprüche und einer gedämpften Gabelrohreinheit besteht, die gedämpfte Gabelrohreinheit aufweisend:
ein inneres Rohr und ein äußeres Rohr, die so ausgebildet sind, dass sie sich teleskopartig in Bezug zueinander bewegen;
eine Schraubenfeder, die innerhalb der Gabeleinheit zwischen einem Stützelement des Inneren Rohrs und einem Stützelement des äußeren Rohrs angeordnet ist; und
einen Zylinder, in dem ein Kolben mit Kolbenstange beweglich angebracht ist, wobei der Zylinder fest mit einem von dem inneren und dem äußeren Rohr verbunden ist, und wobei die Kolbenstange fest mit dem anderen von dem inneren und dem äußeren Rohr verbunden ist, wobei der Zylinder mit Hydraulikflüssigkeit gefüllt ist, und wobei der Kolben ein Ventil umfasst, das die Bewegung der Flüssigkeit durch den Kolben ermöglicht.

11. Eine von außen verstellbare Gabelrohreinheit gemäß der verstellbaren Gabelrohreinheit, wie sie in einem der vorhergehenden Ansprüche definiert ist.

12. Ein Federungssystem umfassend die einstellbare Teleskopgabel nach einem der vorhergehenden Ansprüche oder die von außen verstellbare Gabelrohranordnung nach Anspruch 11.

13. Das Federungssystem nach Anspruch 12, das Federungssystem weiter aufweisend:
eine Fühlereinheit (302) zum Ermitteln von zumindest einem Füllstand eines Kraftstofftanks des Motorrads und einem Weg einer Federung des Motorrads;
eine Steuereinheit (300) zum Steuern des Elektromotors zum automatischen Einstellen der Länge der verstellbaren Gabelrohreinheit, um eine Verringerung des Füllstands des Tanks während der Fahrt zu kompensieren.

14. Das Federungssystem nach Anspruch 12 oder 13, das Federungssystem weiter aufweisend:
einen von außen betätigbaren Schalter (303) zum Umschalten zwischen mindestens zwei Zuständen des Schalters, wie etwa einem Gelände- und einem Straßenzustand; und
einen Speicher (301) zum Bereithalten von Steuersignalen für den Elektromotor entsprechend jedem der der zumindest zwei Zustände des Schalters;
wobei die Steuereinheit weiter konfiguriert ist, um die Steuersignale zu erfassen, die zu einem neuen Zustand des Schalters gehören, nachdem der Schalter geschaltet worden ist, und um den Elektromotor unter Verwendung der erfassten Steuersignale zu steuern.

15. Ein Motorrad aufweisend das Federungssystem nach einem der Ansprüche 12-14 und/oder die von außen einstellbare Gabelrohreinheit nach Anspruch 11 und/oder die Teleskopgabel nach einem der Ansprüche 1-10.

## Revendications

1. Fourche télescopique réglable adaptée pour changer l'assiette d'un motocycle pendant la conduite, ladite fourche télescopique réglable comprenant une paire d'ensembles de tubes de fourche parallèles et espacés (10), dans laquelle chaque ensemble de tubes de fourche comprend :
un tube intérieur (201) et un tube extérieur (101) qui sont configurés pour se déplacer de manière télescopique l'un par rapport à l'autre ;
un ressort hélicoïdal (102) agencé à l'intérieur de l'ensemble de tubes de fourche entre un élément de support du tube intérieur et un élément de support du tube extérieur ;
dans laquelle au moins un des ensembles de tubes de fourche :
a l'un des éléments de support (115) monté de manière mobile dans l'un parmi le tube intérieur et extérieur de sorte qu'il soit capable de se déplacer par rapport audit tube intérieur ou extérieur, respectivement, ledit élément de support monté de manière mobile étant configuré pour former un ensemble de tubes de fourche réglable ;
comprend un moteur électrique (103) pouvant fonctionner de manière externe ayant un arbre d'entraînement (110) ; et
comprend une unité de transmission (112, 114) pour convertir un déplacement rotatif de l'arbre d'entraînement en mouvement de translation de l'élément de support monté de manière mobile changeant ainsi une précharge du ressort hélicoïdal, dans laquelle le moteur électrique et l'unité de transmission sont tous deux agencés dans ledit un parmi le tube intérieur ou le tube extérieur,
**caractérisée en ce que**
l'élément de support monté de manière mobile (115) est monté entre le moteur électrique (103) et l'unité de transmission (112, 114) sur un côté de l'élément de support monté de manière mobile (115) et le ressort hélicoïdal (102) sur l'autre côté de l'élément de support monté de manière mobile (115).

2. Fourche télescopique selon la revendication 1, dans laquelle au moins un des ensembles de tubes de fourche comprend un cylindre (204) dans lequel un piston (203) avec une tige de piston (202) est monté de manière mobile, ledit cylindre étant relié de manière fixe à l'un parmi le tube intérieur et extérieur, et dans laquelle ladite tige de piston est reliée de manière fixe à l'autre parmi le tube intérieur et extérieur ;
dans laquelle le cylindre est rempli de fluide hydraulique et le piston comprend une vanne pour permettre au fluide de se déplacer à travers le piston ; et/ou
dans laquelle la fourche télescopique comprend en outre un élément élastique, tel qu'un ressort, agencé entre le piston et une extrémité du cylindre qui contient la tige de piston pour passer à travers, dans laquelle l'élément élastique a une constante de rappel qui est sensiblement égale à une constante de rappel du ressort hélicoïdal et/ou dans laquelle les constantes de rappel du ressort hélicoïdal et de l'élément élastique sont du même ordre de grandeur.

3. Fourche télescopique selon la revendication 2, dans laquelle l'élément de support monté de manière mobile (115) de l'ensemble de tubes de fourche réglable comprend un tube espaceur monté de manière mobile (115) mis en prise sur une extrémité par ladite unité de transmission et sur une autre extrémité reliée au ressort hélicoïdal, dans laquelle un bord du tube espaceur faisant face au ressort hélicoïdal forme l'élément de support monté de manière mobile du tube intérieur ou du tube extérieur, et dans laquelle le tube espaceur renferme la tige de piston.

4. Fourche télescopique selon la revendication 3, dans laquelle le moteur électrique et l'unité de transmission sont agencés dans un logement (106) qui est relié de manière fixe au tube intérieur ou au tube extérieur, et dans laquelle la tige de piston est reliée de manière fixe au logement.

5. Fourche télescopique selon la revendication 4, dans laquelle l'unité de transmission comprend une boîte de vitesses (108) reliée à un arbre d'entraînement du moteur électrique, ladite boîte de vitesses entraînant un arbre (111, 112), ledit ensemble de tubes de fourche réglable comprenant en outre un tube de réglage (113) qui renferme l'arbre et qui est agencé de manière fixe entre ladite boîte de vitesses et ledit tube espaceur, dans laquelle lesdits tube espaceur et tube de réglage sont configurés pour se déplacer de manière télescopique l'un par rapport à l'autre, ladite unité de transmission fournissant une conversion entre un déplacement rotatif de l'arbre et un déplacement télescopique entre ledit tube espaceur et ledit tube de réglage.

6. Fourche télescopique selon la revendication 5, dans laquelle l'arbre de la boîte de vitesses est un arbre (112) fileté, et dans laquelle le tube de réglage comprend une rainure qui s'étend vers le tube espaceur, l'unité de transmission comprenant en outre un élément de mise en prise qui s'étend depuis l'arbre à travers la rainure du tube de réglage et qui est configuré pour mettre en prise un bord dudit tube espaceur, ledit élément de mise en prise ayant un trou fileté utilisé pour monter l'élément de mise en prise sur l'arbre fileté de telle manière qu'une rotation de l'arbre amène l'élément de mise en prise à se déplacer le long de la rainure pour bouger ainsi le tube espaceur ;
dans laquelle l'arbre d'entraînement du moteur électrique et l'arbre fileté de la boîte de vitesses s'étendent parallèles à un axe du tube intérieur ou du tube extérieur.

7. Fourche télescopique selon l'une quelconque des revendications 5 et 6, dans laquelle le tube de réglage est relié de manière fixe au logement.

8. Fourche télescopique selon l'une quelconque des revendications 5 à 7, dans laquelle le tube de réglage est fermé à une extrémité à l'opposé du moteur électrique par un capuchon (109), ledit capuchon étant relié de manière fixe à la tige de piston.

9. Fourche télescopique selon l'une quelconque des revendications 4 à 8, dans laquelle le cylindre est monté de manière fixe sur le tube intérieur, et dans laquelle le logement est relié de manière fixe au tube extérieur.

10. Fourche télescopique selon l'une quelconque des revendications précédentes, dans laquelle la paire d'ensembles de tubes de fourche consiste en un ensemble de tubes de fourche réglable selon l'une quelconque des revendications précédentes et un ensemble de tubes de fourche amorti, ledit ensemble de tubes de fourche amorti comprenant :
un tube intérieur et un tube extérieur qui sont configurés pour se déplacer de manière télescopique l'un par rapport à l'autre ;
un ressort hélicoïdal agencé à l'intérieur de l'ensemble de fourche entre un élément de support du tube intérieur et un élément de support du tube extérieur ; et
un cylindre dans lequel un piston avec une tige de piston est monté de manière mobile, ledit cylindre étant relié de manière fixe à l'un parmi le tube intérieur et extérieur, et dans laquelle ladite tige de piston est reliée de manière fixe à l'autre parmi le tube intérieur et extérieur, dans laquelle le cylindre est rempli de fluide hydraulique, et dans laquelle le piston comprend une vanne pour permettre au fluide de se déplacer à travers le piston.

11. Ensemble de tubes de fourche réglable de manière externe conforme à l'ensemble de tubes de fourche réglable tel que défini dans l'une quelconque des revendications précédentes.

12. Système de suspension comprenant la fourche télescopique réglable selon l'une quelconque des revendications précédentes ou l'ensemble de tubes de fourche réglable de manière externe selon la revendication 11.

13. Système de suspension selon la revendication 12, ledit système de suspension comprenant en outre :
une unité de détection (302) pour détecter au moins un parmi un niveau de remplissage d'un réservoir de carburant dudit motocycle et une course d'une suspension dudit motocycle ;
une unité de commande (300) pour commander le moteur électrique pour régler automatiquement la longueur de l'ensemble de tubes de fourche réglable pour compenser une réduction du niveau de remplissage du réservoir durant la conduite.

14. Système de suspension selon la revendication 12 ou 13, ledit système de suspension comprenant en outre :
un commutateur pouvant fonctionner de manière externe (303) pour commuter au moins deux états du commutateur, tels qu'un état hors route et sur route ; et
une mémoire (301) pour conserver des signaux de commande pour le moteur électrique correspondant à chacun des au moins deux états du commutateur ;
dans lequel l'unité de commande est en outre configurée pour acquérir les signaux de commande appartenant à un nouvel état du commutateur après que le commutateur a été commuté, et pour commander le moteur électrique en utilisant les signaux de commande acquis.

15. Motocycle comprenant le système de suspension selon l'une quelconque des revendications 12 à 14 et/ou l'ensemble de tubes de fourche réglable de manière externe selon la revendication 11 et/ou la fourche télescopique selon l'une quelconque des revendications 1 à 10.
